(19) Europäisches Patentamt
European Patent Office
Office européen des brevets

(11) **EP 2 513 937 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(21) Anmeldenummer: **10773039.2**

(22) Anmeldetag: **25.10.2010**

(51) Int Cl.:
*H01H 33/34* (2006.01)   *F15B 11/00* (2006.01)
*F16K 11/22* (2006.01)   *F16K 31/42* (2006.01)

(86) Internationale Anmeldenummer:
**PCT/EP2010/066043**

(87) Internationale Veröffentlichungsnummer:
**WO 2011/061041 (26.05.2011 Gazette 2011/21)**

(54) **FLUIDISCHE VORRICHTUNG**

FLUID DEVICE

DISPOSITIF FLUIDIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2009 DE 102009053901**

(43) Veröffentlichungstag der Anmeldung:
**24.10.2012 Patentblatt 2012/43**

(73) Patentinhaber: **ABB Schweiz AG**
**5400 Baden (CH)**

(72) Erfinder:
• **SCHMIDT, Matthias**
**60596 Frankfurt (DE)**
• **KÖRBER, Franz-Josef**
**63674 Altenstadt (DE)**

(74) Vertreter: **ABB Patent Attorneys et al**
**c/o ABB Schweiz AG**
**Intellectual Property CH-IP**
**Brown Boveri Strasse 6**
**5400 Baden (CH)**

(56) Entgegenhaltungen:
DE-A1- 2 047 838     DE-A1- 2 047 847
DE-U1- 20 116 920     JP-A- 8 091 742
US-A- 3 213 334      US-A- 4 066 103

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine fluidische Vorrichtung nach dem Oberbegriff des Anspruches 1.

Eine gattungsgemäße fluidische Vorrichtung ist aus der DE 20 47 847 A1 bekannt geworden. Eine weitere fluidische Vorrichtung ist aus DE 201 16 920 U1 bekannt. Derartige fluidische Vorrichtungen werden eingesetzt, um Kolben-Zylinderanordnungen anzusteuern, bei denen sich innerhalb eines Zylinderraumes ein Kolben befindet, an dessen einer Seitenfläche ein Ende einer Kolbenstange angeschlossen ist, die aus dem Zylinderraum ausfahrbar und in diesen einziehbar ist. Auf der Seite des Kolbens, an der die Kolbenstange anschließt, befindet sich der Raum unterhalb des Kolbens, wogegen auf der anderen Seite des Kolbens der Raum oberhalb des Kolbens angeordnet ist. Damit ist die Querschnittsfläche des Raumes oberhalb des Kolbens größer ist als die Querschnittsfläche unterhalb des Kolbens, weil bei letzterer die Querschnittsfläche der Kolbenstange zum Abzug kommt. Wenn den Räumen oberhalb und unterhalb des Kolbens Hochdruckfluid zugeführt wird, bewegt sich der Kolben in Richtung Ausfahren der Kolbenstange; wenn der Raum oberhalb des Kolbens entlastet wird, in dem dieser Raum und das darin befindliche Fluid mit einem auf Niederdruck befindlichen Vorratsbehälter, auch Niederdrucktank genannt, verbunden wird, bewegt sich der Kolben aufgrund des Hochdruckes im Raum unterhalb des Kolbens in die entgegengesetzte Richtung, so dass die Kolbenstange eingefahren wird.

Mit dieser Kolben-Zylinder-Anordnung können beispielsweise die beweglichen Kontaktstücke eines Hochspannungsleistungsschalters betätigt werden.

Natürlich können mit einer solchen Kolben-Zylinderanordnung auch andere Bauteile bewegt werden, wie zum Beispiel Kranarme, Schaufeln von Schaufelbaggern, und dergleichen.

Bei vielen Anwendungsfällen soll z.B. eine Umschaltung ohne Umsteuerverluste, d.h. wenn ein Volumenstrom während des Schaltvorganges vom Druckanschluss über beide Steuerkanten zum Niederdrucktank vermieden werden soll, erfolgen, so dass ein unterschiedlich großer Strömungswiderstand bzw. Volumenstrom je nach Schaltstellung, eine geringe Schaltzeit oder eine Betätigung mit einem geringen Vorsteuervolumen erreicht werden können.

Diese Forderungen können bei Einsatz eines 3/2-Wegeventiles jedoch häufig nur unzureichend oder mit hohem Herstellungsaufwand und hohen Herstellungskosten erfüllt werden. Kommen zwei 2/2-Wegeventile als Hauptsteuerventile zum Einsatz, muss bei einer Umschaltung zunächst das offene Ventil geschlossen werden, bevor das geschlossene Ventil geöffnet wird, wenn ein Umsteuerverlust vermieden werden soll und wenn keine weiteren Maßnahmen getroffen werden. Hierzu sind aber bei vorgesteuerten Ventilen wenigstens zwei Vorsteuerventile mit einer geeigneten Ansteuerelektrik mit beispielsweise einer zeitverzögerten oder sensorgesteuerten Auslösung des zweiten Ventils erforderlich. Dies verursacht weitere hohe Kosten sowie eine unnötig große Verzögerung der Öffnung des zweiten 2/2-Wegeventils nach dem Schließen des ersten.

Aufgabe der Erfindung ist es, eine fluidische Vorrichtung der Eingangs genannten Art weiter zu verbessern und zu vereinfachen.

Diese Aufgabe wird erfindungsgemäß durch eine fluidische Vorrichtung mit den Merkmalen nach Anspruch 1 gelöst. Vorteilhafte Ausgestaltungen sind in den abhängigen Ansprüchen angegeben.

Die mit der Erfindung erzielten Vorteile bestehen insbesondere darin, dass mittels einer Ventilanordnung aus zwei handelsüblichen Vorsteuerventilen und zwei entsprechend ausgelegten 2/2-Wegeventilen als Hauptventile oder Hauptsteuerventile die oben aufgeführten Anforderungen wie beispielsweise eine Umschaltung ohne Umsteuerverluste, ein unterschiedlich großer Strömungswiderstand bzw. Volumenstrom je nach Schaltstellung, eine sehr kurze Schaltzeit und eine Betätigung mit einem geringen Aussteuervolumen trotz eines vergleichsweise geringen Herstellungsaufwandes erfüllt werden können.

Dabei ist die Ventilanordnung nach einer besonders vorteilhaften Ausgestaltung dadurch gekennzeichnet, dass zur Zuführung des Hochdruckfluids in den Raum oberhalb des Kolbens das erste Vorsteuerventil dem auf Hochdruck befindlichen Fluid den Weg zur Hauptsteuerfläche des ersten Hauptventils freigibt, so dass dieses das auf Hochdruck befindliche Fluid dem Raum oberhalb des Kolbens zusteuert, wobei das zweite Vorsteuerventil geschlossen ist, und dass zum Entlasten des Raumes oberhalb des Kolbens das zweite Vorsteuerventil den Weg von der Hauptsteuerfläche des zweiten Hauptsteuerventils zum Niederdrucktank und damit das zweite Hauptsteuerventil den Weg von dem Raum oberhalb des Kolbens zum Niederdrucktank freigibt.

Erfindungsgemäß ist zwischen den Hauptsteuerflächen der Hauptsteuerventile und dem Raum oberhalb des Kolbens der Kolben-Zylinderanordnung eine Blende mit geringem Querschnitt vorgesehen ist.

Diese Blende ist insoweit von Bedeutung, als sie im Falle einer Leckage z.B. der Vorsteuerventile den Hochdruck oder auch den Niederdruck vor der Kolben-Zylinderanordnung aufrecht erhält, so dass eine fehlerhafte Bewegung des Kolbens bei unerwünschtem Absinken des Hochdrucks bzw. unerwünschtem Anstieg des Niederdrucks durch Leckage verhindert wird.

In besonders vorteilhafter Weise ist der Kolben des als bistabiles Ventil ausgebildeten ersten Hauptsteuerventils in seinen Endstellungen festgehalten. Dies wird in einer ersten Ausführungsform dadurch erreicht, dass der Kolben mittels einer federnden Kugelverrastung mechanisch festgehalten ist. In einer weiteren Ausgestaltung kann der Kolben mechanisch-magnetisch in seinen Endstellungen festgehalten sein. Dabei kann sich der Kolben in einem Zylinder bewegen, wobei an einem Ende des Zylinders ein Permanentmagnet und zwischen diesem Ende und dem Kolben eine Feder vorgesehen sind, und die auf den Kolben wirkende Kraft einen Nulldurchgang aufweist.

Anhand der Zeichnung, in der zwei Ausführungsbeispiele der Erfindung dargestellt sind, sollen die Erfindung sowie weitere vorteilhafte Ausgestaltungen und Verbesserungen und weitere Vorteile näher erläutert und beschrieben werden.

Es zeigen

Fig. 1 eine Schaltungsanordnung eines erfindungsgemäßen Ventilsystems,
Fig. 2 eine schematische Darstellung des zweiten Hauptventils,
Fig. 3 eine schematische Darstellung einer ersten Ausführungsform des ersten Hauptventils,
Fig. 4 eine alternative Ausführungsform für das erste Hauptventil, und
Fig. 5 ein Kraft- Wegdiagramm der Ausführung des Hauptventils gemäß Fig. 4.

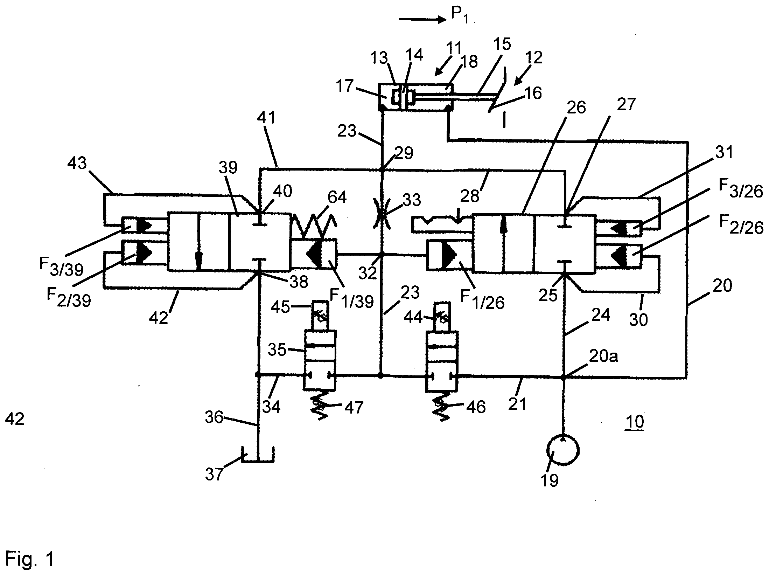

Es sei Bezug genommen auf die Fig. 1.

Die Fig. 1 zeigt eine Ventilanordnung 10, die zur Ansteuerung einer Kolbenzylinderanordnung 11 dient, mit der ein elektrischer Hochspannungsleistungsschalter 12 betätigt werden kann. Die Kolben-Zylinderanordnung 11 besitzt einen Zylinder 13, in dem ein Kolben 14 bewegbar ist, an dessen einer Seite eine Kolbenstange 15 angeschlossen ist, die mit einem beweglichen Kontaktstück 16 des Hochspannungsleistungsschalters 12 verbunden ist. Der Kolben 14 unterteilt den Zylinderinnenraum in einem Raum 17 oberhalb und in einen Raum 18 unterhalb des Kolbens 14, wobei der letztere die Kolbenstange 15 aufnimmt. Da an der Kolbenfläche, die den Raum 18 unterhalb des Kolbens 14 begrenzt, die Kolbenstange 15 anschließt und damit die Kolbenfläche um den Querschnitt der Kolbenstange 15 vermindert, ist die Kolbenfläche, die den Raum 17 oberhalb des Kolbens 14 begrenzt, größer als die zum Raum 18 unterhalb des Kolbens 14 zugewandte Kolbenfläche

Zum Antrieb des Kolbens 14, so dass dieser ausgefahren wird, wird Hydraulikfluid mittels einer Pumpe oder auf andere Weise aus einem Hochdruckbehälter 19 je nach Stellung der Ventilanordnung dem Raum 17 oberhalb des Kolbens 14 und dem Raum 18 unterhalb des Kolbens 14 wie folgt zugeführt, was für den Leistungsschalter ein Einschaltvorgang ist:

An dem Hochdruckbehälter 19 schließt ein erster Leitungsabschnitt oder Leitungszug 20 an, der den Hochdruckbehälter 19 mit dem Raum 18 unterhalb des Kolbens 14 verbindet. Am ersten Leitungsabschnitt 20 schließt ein zweiter Leitungsabschnitt 21 an, der mit einem ersten Vorsteuerventil 22 verbunden ist; das Vorsteuerventil 22 ist weiterhin mit einem dritten Leitungsabschnitt 23 verbunden, der in den Raum 17 oberhalb des Kolbens 14 einmündet und damit das erste Vorsteuerventil 22 mit dem Raum 17 oberhalb des Kolbens 14 verbindet. An dem ersten Leitungsabschnitt 20, und dort insbesondere an dem Knotenpunkt zwischen dem ersten und dem zweiten Leitungsabschnitt 20, 21 schließt ein vierter Leitungsabschnitt 24 an, der mit der ersten Öffnung, im folgendem auch Eingangsöffnung 25 eines ersten Hauptsteuerventils 26 genannt, verbunden ist. An der zweiten Öffnung, im folgendem auch Ausgangsöffnung 27 des ersten Hauptsteuerventils 26 genannt, schließt ein fünfter Leitungsabschnitt 28 an, der mit dem dritten Leitungsabschnitt 23 an einem Knotenpunkt 29 verbunden ist. Am ersten Hauptsteuerventil 26 ist eine erste Rückführung 30 vorgesehen, die an der Eingangsöffnung 25 anschließt und an einer zweiten Steuerfläche $F_2/26$ angeschlossen ist. Weiterhin ist eine dritte Steuerfläche F3/26 vorgesehen, die über eine zweite Rückführung 31 mit der Ausgangsöffnung 27 verbunden ist.

Das erste Hauptsteuerventil 26 besitzt eine erste Steuerfläche F1/26, die so bemessen ist, dass folgende Beziehung gilt:

$$F_1/26 = F_2/26 + F_3/26.$$

Die erste Steuerfläche $F_1/26$ ist mit dem dritten Leitungsabschnitt 23 über einen zweiten Knotenpunkt 32 verbunden. Zwischen dem ersten Knotenpunkt 29 und dem zweiten Knotenpunkt 23 befindet sich eine Blende 33 mit geringem Querschnitt, siehe auch weiter unten.

An dem dritten Leitungsabschnitt 23 ist ein sechster Leitungsabschnitt 34 angeschlossen, in dem sich ein zweites Vorsteuerventil 35 befindet.

Der sechste Leitungsabschnitt 34 ist an einem siebten Leitungsabschnitt 36 angeschlossen, der einerseits in einen Niederdrucktank 37 und andererseits in eine ersten Öffnung, im folgenden auch Eingangsöffnung 38 eines zweiten Hauptsteuerventils 39 genannt, einmündet. Die zweite Öffnung, im folgendem auch Ausgangsöffnung 40 des zweiten Hauptsteuerventils 39 genannt, ist über einen achten Leitungsabschnitt 36a mit dem ersten Knotenpunkt 29 verbunden.

Am zweiten Knotenpunkt 32 ist eine erste Steuerfläche $F_1/39$ des zweiten Hauptventil 39 angeschlossen; das zweite Hauptsteuerventil 29 besitzt je eine den Steuerflächen $F_2/26$ und $F_3/26$ entsprechende zweite und dritte Steuerfläche $F_2/39$ und $F3/39$, wobei auch hier die Regel gilt: $F_1/39 = F_2/39 + F_3/39$, wobei die auf die Steuerflächen $F_1/39$ bzw. $F_2/39 + F_3/39$ wirkenden Drücke in entgegengesetzter Richtung auf den Kolben (siehe weiter unten) des Hauptsteuerventils 39 wirken. Wie beim ersten Hauptsteuerventil 26 ist die Eingangsöffnung 38 des zweiten Hauptsteuerventils 39 mit einer ersten Rückführung 42 und der zweiten Steuerfläche $F_2/39$ und die Ausgangsöffnung 40 des zweiten Hauptsteuerventils 39 mit der dritten Steuerfläche $F_3/39$ über eine Rückführung 43 verbunden.

Die Vorsteuerventile 22, 35 sind elektromagnetisch angetrieben und werden mittels eines Elektromagnetsystems 44 bzw. 45 aus der in Fig. 1 gezeigten Sperrstellung in die Durchlassstellung verbracht; je eine Rückstellfeder 46 und 47 stellt die Vorsteuerventile 22 und 35 wieder in die Sperrstellung.

Die Arbeitsweise der Ventilanordnung 10 ist nun wie folgt: Die Fig. 1 zeigt den Leistungsschalter 12 in Ausschaltstellung. Wenn der Leistungsschalter 12 eingeschaltet werden soll, dann wird das erste Vorsteuerventil 22 kurzzeitig in Öffnungsstellung verbracht. Dadurch gelangt Hochdruck über den Leitungszug 23 an die erste Steuerfläche $F_1/26$, wodurch das erste Hauptventil 26 geöffnet und der Leitungszug 24 mit dem Leitungszug 28 verbunden wird, so dass das Hochdruckfluid in den Raum 17 oberhalb des Kolbens 14 befördert wird. Aufgrund der unterschiedlichen Kolbenflächen wird eine Kraft erzeugt, die den Kolben 14 und damit die Kolbenstange 15 in Pfeilrichtung P1 bewegt, wodurch das bewegliche Kontaktstück 16 in Einschaltstellung verbracht wird. Da das erste Hauptsteuerventil 26, wie weiter unten näher erläutert werden soll, ein bistabiles 2/2-Wegeventil ist, bleibt das erste Hauptsteuerventil 26 in Durchlassstellung. Die hydraulischen Kräfte auf den Kolben 14 sind dabei auf Grund der obigen Formel null. Über den Knotenpunkt 32 wird auch die Steuerfläche $F_1/39$ des zweiten Hauptsteuerventils 39 mit Hochdruck beaufschlagt, so dass das zweite Hauptsteuerventil 39 in Schließstellung bleibt.

Das Vorsteuerventil 22 geht dann in die Sperrstellung zurück aufgrund der Rückstellfeder 46. Damit ist der Bereich zwischen dem ersten Hauptsteuerventil 26 und über den Leitungszug 41 auch zwischen den zweiten Hauptsteuerventil 39 und der Kolben-Zylinderanordnung 11 auf Hochdruck.

Bei einer Ausschalthandlung arbeitet die Ventilanordnung 10 wie folgt:

Wenn das bewegliche Kontaktstück 16 in Öffnungsstellung gehen soll, dann ist der Raum 17 oberhalb des Kolbens 14 zu entlasten. Dies erfolgt dadurch, dass das zweite Vorsteuerventil 35 auf Durchlass umgesteuert wird, wodurch im Leitungszug 23 zwischen dem zweiten Vorsteuerventil 35 und der Blende 33 Niederdruck ansteht, so dass an der ersten Steuerfläche $F_1/26$ des ersten Hauptventil 26 ebenfalls Niederdruck ansteht. Dadurch wird das erste Hauptsteuerventil 26 (es sei hier eingefügt, daß "Hauptsteuerventil" und "Hauptventil" das gleiche sind) wieder zurück in Sperrstellung umgesteuert, aufgrund der durch die Steuerkräfte $F_2/26$ und $F_3/26$ auf den Kolben des ersten Hauptventils 26 erzeugten Kraft. Darüber hinaus steht an der ersten Steuerfläche $F_1/39$ Niederdruck an, so dass das zweite Hauptventil 39 auf Durchlass umgesteuert wird, weil einerseits zwar an der zweiten Steuerfläche $F_2/39$ Niederdruck ansteht, jedoch aufgrund der Rückführung 43 an der dritten Steuerfläche $F_3/39$ Hochdruck wirkt. Dadurch bewegt sich der Kolben (siehe weiter unten) des zweiten Hauptsteuerventils 39 in Durchlassstellung, so dass der Raum 17 oberhalb des Kolbens 14 über das zweite Hauptsteuerventil 39 entlastet wird. Dadurch bewegt sich aufgrund des im Raum 18 unterhalb des Kolbens befindlichen Hochdrucks der Kolben 14 und damit die Kolbenstange 15 in eine Pfeilrichtung, die der Pfeilrichtung $P_1$ entgegengesetzt ist. Damit wird eine Ausschaltung des Leistungsschalters 12 bewirkt.

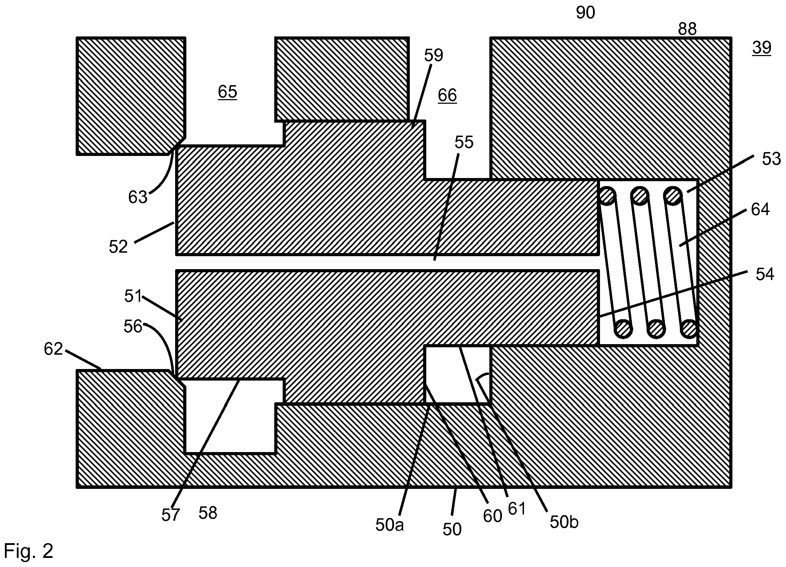

Das zweite Hauptventil 39, welches in der Fig. 2 schematisch dargestellt ist, besitzt eine Zylinderkörper 50, kurz auch Zylinder 50 genannt, in dem ein Kolben 51 hin- und herbewegbar ist, wobei der Kolben 51 eine freie Fläche 52 aufweist, die mit dem Niederdrucktank 37 in Verbindung steht und damit nicht vom Hochdruck beaufschlagt wird. In die der freien Fläche 52 entgegengesetzt liegende, in eine Vertiefung 53 des Zylinders 50 eingreifende innere Fläche 54 mündet ein Innenkanal 55 ein, dessen anderes Ende in die freie Fläche 52 einmündet, so dass auf die innere Fläche 54, kurz auch Innenfläche 54 genannt, der Niederdruck, der an der freien Fläche 52 ansteht, einwirkt, so dass die Innenfläche 54 mit dem Tank 37 verbunden ist. Die freie Fläche 52 geht über eine Dichtkante 56 über in einen ersten Kolbenabschnitt 57, an den eine Stufung 58 anschließt, über die der erste Kolbenabschnitt 57 mit einem zweiten Kolbenabschnitt 59 verbunden ist, dessen Außendurchmesser größer ist als der Außendurchmesser des ersten Kolbenabschnittes 57. Über eine weitere Stufung 60 geht der zweite Kolbenabschnitt 59 über in einen dritten Kolbenabschnitt 61, der in die Vertiefung 53 eingreift, dessen Außendurchmesser kleiner ist als der Außendurchmesser des Kolbenabschnittes 57 und an dem die Innenfläche 54 anschließt.

Im Bereich der freien Fläche 52 besitzt der Zylinderkörper 50 einen ersten Zylinderabschnitt 62, dessen Innendurchmesser kleiner ist als der Außendurchmesser des ersten Kolbenabschnittes 57, wobei das innere Ende des ersten Zylinderabschnittes 62 eine Anfasung 63 aufweist, die sich unter einem Winkel von etwa 45 Grad ins Innere des Zylinders 50 öffnet, so dass diese Anfasung 63 als Dichtsitz für die Dichtkante 56 dient. Am Zylinderkörper 50 ist ein zweiter Zylinderabschnitt 50a vorgesehen, dessen Innendurchmesser dem Außendurchmesser des zweiten Kolbenabschnittes 59 entspricht, sodass der zweite Kolbenabschnitt 59 in dem zweiten Zylinderabschnitt 50a gleitend bewegbar ist. An diesen zweiten Zylinderabschnitt 50a schließt sich eine Stufung 50b an, die radial verläuft und über die der zweite Zylinderabschnitt 50a in die Vertiefung 53 übergeht.

Die beiden Flächen 52 und 54 bilden in ihrer Gesamtheit die zweite Steuerfläche $F_2/39$, wogegen die Stufung 58 die Steuerfläche F3/39 bildet. Die Stufung 60 entspricht dann der ersten Steuerfläche $F_1/39$.

Der Kolben 51 steht unter dem Druck einer Schraubendruckfeder 64, die sich in der Vertiefung 53 zwischen der inneren Fläche 54 und dem Boden der Vertiefung 53 befindet.

Im Zylinderkörper 50 befinden sich zwei Bohrungen 65 und 66, von denen die Bohrung 65 der Ausgangsöffnung 40 entspricht, wogegen die freie Fläche 52 der Eingangsöffnung 38 zugeordnet ist. Die gezeichnete Stellung des zweiten Hauptsteuerventils 39 entspricht der Stellung, in der die Entlastung zum Tank 37 abgeschlossen ist.

Die Bohrung 66 mündet mit einer Mantellinie in die Stufung 50b ein.

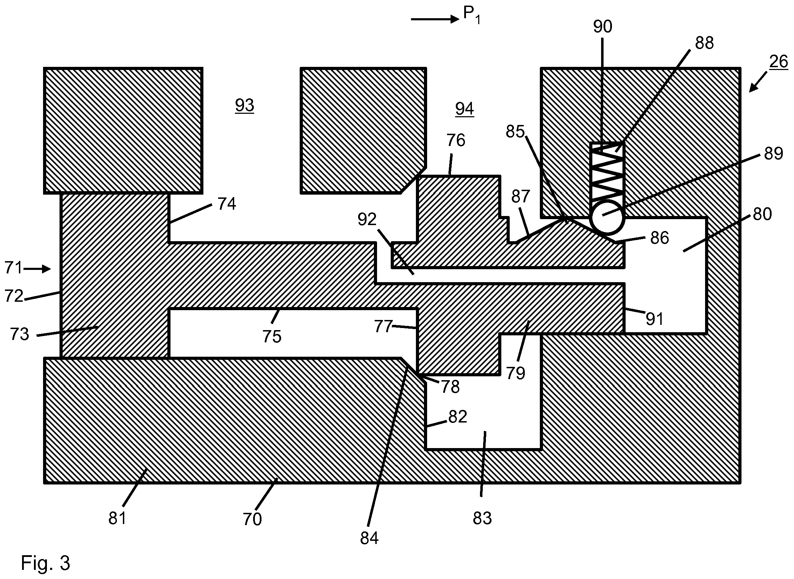

Es sei nun Bezug genommen auf die Fig. 3, in der ein erstes Ausführungsbeispiel eines ersten Hauptsteuerventils 26 dargestellt ist.

Das erste Hauptsteuerventil 26 gemäß der Fig. 3 besitzt einen Zylinderkörper 70, in dem ein Kolben 71 bewegbar angeordnet ist. Der Kolben 71 besitzt eine freie Fläche 72, an der ein erster Kolbenabschnitt 73 anschließt, der über eine erste radiale Stufung 74 in einen zweiten Kolbenabschnitt 75 übergeht und der gegenüber dem ersten Kolbenabschnitt 73 einen verringerten Durchmesser aufweist. An diesen zweiten Kolbenabschnitt 75 schließt ein dritter Kolbenabschnitt 76 an, wobei zwischen dem zweiten und dem dritten Kolbenabschnitt 75 und 76 eine zweite radiale Stufung 77 vorgesehen ist. Die Kante zwischen der zweiten Stufung 77 und dem dritten Kolbenabschnitt 76 bildet eine Dichtkante 78. An den dritten Kolbenabschnitt 76 schließt sich ein vierter Kolbenabschnitt 79 an, der in eine Vertiefung 80 im Zylinderkörper 70 eingreift.

Der Außendurchmesser des ersten Kolbenabschnittes 73 ist größer als der Außendurchmesser des zweiten Kolbenabschnittes 75. Der dritte Kolbenabschnitt 76 besitzt einen Außendurchmesser, der größer ist als der Außendurchmesser des ersten Kolbenabschnittes 73, und der Innendurchmesser der Vertiefung 80 und damit der Innendurchmesser des vierten Kolbenabschnittes 79 ist kleiner als der Außendurchmesser des ersten Kolbenabschnittes 73. Im Inneren der Vertiefung 80 ist der Kolben 71 durch eine Innenendfläche 91 begrenzt.

Der Zylinderkörper 70 besitzt einen ersten Zylinderabschnitt 81, dessen Innendurchmesser dem Außendurchmesser des ersten Kolbenabschnittes 73 entspricht und der über eine Stufung 82 in einen zweiten Zylinderabschnitt 83 übergeht, wobei an der Übergangsstelle zwischen dem ersten Zylinderabschnitt 81 und der Stufung 82 eine der Anfasung 63 entsprechende Anfasung 84 gebildet ist, die zusammen mit der Dichtkante 78 eine Abdichtung bildet.

An der Außenfläche des vierten Kolbenabschnittes 79 befindet sich ein radial vorspringender Vorsprung 85, der zwei dachförmig einander zugeordnete Schrägflächen 86 und 87 aufweist. In die Vertiefung 80 mündet radial eine Sacklochbohrung 88 ein, in der eine Kugel 89 geführt ist, die von einer Schraubenfeder 90 dauernd gegen die Schrägflächen 86 bzw. 87 gedrückt wird.

In der Stellung, die in der Fig. 3 gezeigt ist, drückt die Kugel 89 gegen die Schrägfläche 86 und verhindert auf diese Weise, dass sich der Kolben 71 in Pfeilrichtung P1 in die Vertiefung 80 hinein bewegen kann, wenn keine speziellen Kräfte auf den Kolben 71 einwirken. Wenn das erste Hauptventil 26 von dem Vorsteuerventil 22 umgesteuert wird, wirkt auf die erste Steuerfläche $F_1/26$, die der freien Fläche 72 entspricht, Hockdruck, so dass der Kolben 71 in Pfeilrichtung P1 verschoben wird, wodurch die Kugel 89 auf der Schrägfläche 86 aufläuft und ins Innere der Sacklochbohrung 88 hineingedrückt wird. Sobald die Kugel 89 die Schrägfläche 87 erreicht, wird, bei ansonsten keinen weiteren Kräften auf den Kolben 71, die Kugel 89 den Kolben 71 festhalten, wobei sich die Kugel 89 zwischen der Schrägfläche 87 und dem dritten Kolbenabschnitt 76 befindet.

In den zweiten Kolbenabschnitt 75 und in die Innenendfläche 91 mündet ein Kanal 92, der den Raum außerhalb des zweiten Kolbenabschnittes 75 mit dem Innenraum der Vertiefung 80 verbindet. Dadurch herrscht an der Stufung 77 und an der Innenfläche 91 der gleiche Druck.

Der Zylinderkörper 70 besitzt eine erste radiale Bohrung 93 und eine zweite radiale Bohrung 94, wobei die erste Bohrung 93 in den Bereich des zweiten Kolbenabschnittes 75 und die Bohrung 94 in den zweiten Zylinderabschnitt 83 einmünden. Die Stellung gemäß Fig. 3 ist diejenige Stellung, die der Kolben 71 einnimmt, wenn an der ersten Steuerfläche $F_1/26$ = freie Fläche 72 Niederdruck ansteht. Sobald das erste Vorsteuerventil 22 in Durchlassrichtung gesteuert ist und das zweite Vorsteuerventil 35 sich in Sperrstellung befindet, wird der Kolben 71 aufgrund des an der Fläche 72 anstehenden Hochdrucks nach rechts bewegt, wodurch die Dichtungsstelle 78/84 geöffnet wird, so dass Hochdruckfluid über die Bohrung 94 strömen kann. Die Bohrung 94 entspricht dann der Eingangsöffnung 25 und die Bohrung 93 der Ausgangsöffnung 27.

Wenn das erste Vorsteuerventil 22 umgesteuert wird, dann steht sowohl auf der Fläche $F_1/26$ des ersten Hauptsteuerventils 26 und der Fläche $F_1/39$ des zweiten Hauptsteuerventils 39 Hochdruck an. Da das Vorsteuerventil 22 nur kurzzeitig geöffnet wird, steht an den beiden ersten Steuerflächen $F_1/26$ und $F_1/39$ Hochdruck an. Das zweite Vorsteuerventil 35 ist geschlossen. Wenn nun am zweiten Vorsteuerventil 35 eine Leckage auftritt, dann kann der Druck zwischen den beiden Steuerflächen $F_1/26$ und $F_1/39$ abfallen, sodass unerwünschte Schalthandlungen der beiden Hauptsteuerventile 26 und 39 bewirkt werden können. Die Blende 33, die sich zwischen den beiden Steuerflächen $F_1/26$ und $F_1/39$ und dem Raum 17 oberhalb des Kolbens befindet, hat den Zweck, diesen beiden Steuerflächen $F_1/26$ und $F_1/39$ Druckfluid nachzuliefern, sodass hierüber ein Ausgleich stattfinden kann.

In dem Fall, wenn das zweite Vorsteuerventil 35 kurzzeitig geöffnet wird, steht an den beiden ersten Steuerflächen $F_1/26$ und $F_1/39$ Niederdruck an. Aufgrund einer Leckage im ersten Vorsteuerventil 22 könnte Hochdruck in die Leitung 23 und damit an die beiden ersten Steuerflächen $F_1/26$ und $F_1/39$ gelangen, sodass auch hierdurch, wenn die Blende 33 nicht für einen Ausgleich sorgen würde, unerwünschte Schalthandlungen bewirkt würden.

Mit anderen Worten:

Beide Stufen, nämlich die Vorsteuerventilstufe und die Hauptsteuerventilstufe sind über die Blende 33 miteinander verbunden, sodass ein Ausgleich, der zu ungewollten Schalthandlungen führt, über die Blende 33 erreicht wird.

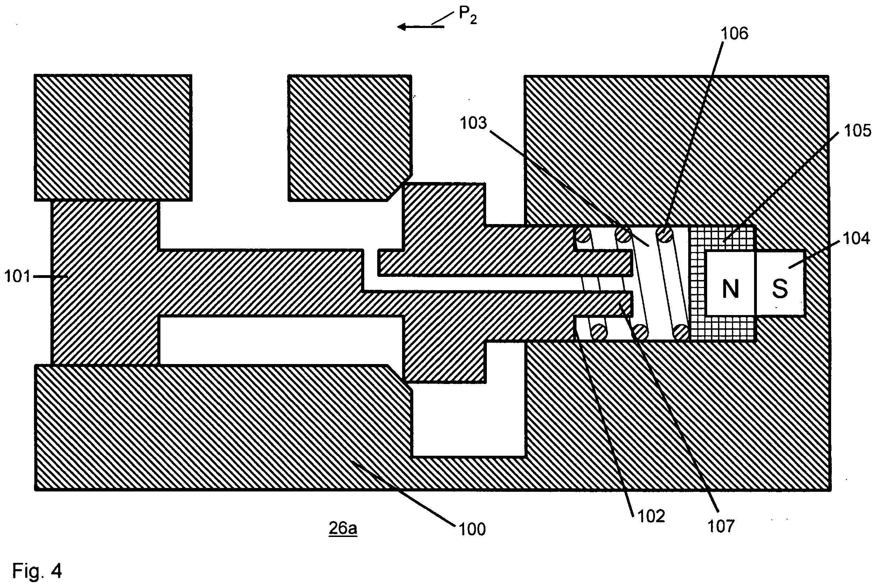

Bei der Ausführungsform gemäß Fig. 4 ist das erste Hauptsteuerventil ähnlich aufgebaut wie dasjenige gemäß Fig. 3, sodass es hier die Bezugsziffer 26a erhält. Es besitzt einen Zylinderkörper 100, in dem ein Kolben 101 geführt ist, der mit einer Innenfläche 102 in einer Vertiefung 103 eingreift. Am Boden der Vertiefung 103 ist ein Permanentmagnet 104 angeordnet, der in einen nicht magnetisierbaren Werkstoffteil 105 eingebettet ist; zwischen der Innenfläche 102 und der freien Fläche des nicht magnetisierbaren Werkstoffteils 105 ist eine Schraubenfeder 106 angeordnet, die den Kolben 101 dauernd in Pfeilrichtung $P_2$ zu drücken sucht. An der Innenfläche 102 ist ein axialer Fortsatz 107 angeformt, welcher dann, wenn der Kolben 101 entgegen der Pfeilrichtung $P_2$ ins Innere der Vertiefung 103 eingedrückt ist und sich die freie Fläche des axialen Fortsatzes 107 gegen die freie Fläche des nichtmagnetisierbaren Werkstoffteils 105 anlegt, von den Permanentmagneten 104 entgegen dem Druck der Feder 106 dauernd angezogen ist. Sobald aufgrund der hydraulischen Druckkräfte der Kolben 101 in Pfeilrichtung $P_2$ gedrückt wird, überwiegt die Kraft der Druckfeder 106 in Pfeilrichtung $P_2$, wodurch insgesamt ein stabiles Ventil erzeugt wird. Im übrigen ist das Hauptventil 26a gleich aufgebaut wie das Hauptventil 26, ohne die Verrastung.

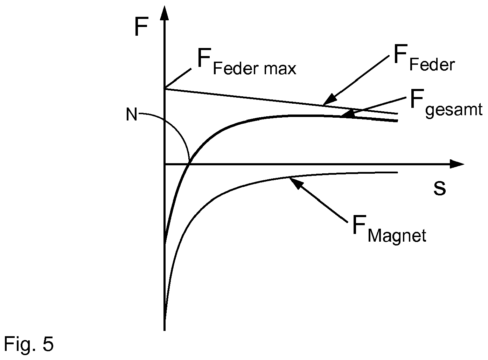

Die Fig. 5 zeigt die entsprechenden Kraftverhältnisse. Über den Weg S, den der Kolben zurücklegt, ist die Kraft aufgetragen, wobei die Federkraft von ihrem maximalen Wert $F_{Federmax}$ bei Bewegung des Kolbens nach links in Richtung $P_2$ linear abnimmt, wogegen die Magnetkraft $F_{magnet}$ von einem Maximalwert, wenn sich der Kolben 101 in der Stellung befindet, in der die Federkraft maximal ist, in nichtlinearer Weise gegen Null geht, wenn sich der Kolben 101 von dem

Permanentmagnet 104 entfernt. Die resultierende Kraft $F_{gesamt}$ besitzt einen Nulldurchgang N. Links des Nulldurchgangs, also wenn der Abstand zwischen dem Kolben und dem Permanentmagneten klein ist, überwiegt die Anziehungskraft des Permanentmagneten und rechts vom Nulldurchgang, wenn die Magnetkraft kleiner wird, überwiegt die Kraft der Feder, so dass die resultierende Kurve $F_{gesamt}$ gebildet wird.

Festzuhalten ist, dass der Zylinderkörper 100 ebenso wie der bewegliche Kolben 101 aus ferromagnetischem Werkstoff hergestellt wird, wogegen die Einbettungsmasse 105 als nicht magnetisierbares Werkstoffteil ausgebildet sein muss.

## Bezugszeichenliste

| | | | | |
|---|---|---|---|---|
| 10 | Ventilanordnung | | 35 | zweites Vorsteuerventil |
| 11 | Kolben-Zylinderanordnung | | 36 | siebter Leitungsabschnitt |
| 12 | Hochspannungs-Leistungsschalter | | 37 | Niederdrucktank |
| | | | 38 | Eingangsöffnung |
| 13 | Zylinder | | 39 | zweites Hauptsteuerventil |
| 14 | Kolben | | 40 | Ausgangsöffnung |
| 15 | Kolbenstange | | 41 | achter Leitungsabschnitt |
| 16 | bewegliches Kontaktstück | | 42 | erste Rückteilung |
| 17 | Raum oberhalb des Kolbens | | 43 | zweite Rückteilung |
| 18 | Raum unterhalb des Kolbens | | 44 | Elektromagnetsystem |
| 19 | Hochdruckbehälter | | 45 | Elektromagnetsystem |
| 20 | erster Leitungsabschnitt, Leiterzug | | 46 | Rückstellfeder |
| | | | 47 | Rückstellfeder |
| 21 | zweiter Leitungsabschnitt, Leiterzug | | 50 | Zylinderkörper |
| | | | 51 | Kolben |
| 22 | erstes Vorsteuerventil | | 52 | freie Fläche |
| 23 | dritter Leitungsabschnitt | | 53 | Vertiefung |
| 24 | vierter Leitungsabschnitt | | 54 | innere Fläche |

(fortgesetzt)

| 25 | Eingangsöffnung | 55 | Innenkanal |
|---|---|---|---|
| 26 | erstes Hauptsteuerventil | 56 | Dichtkante |
| 26a | erstes Hauptsteuerventil | 57 | erster Kolbenabschnitt |
| 27 | Ausgangsöffnung | 58 | Stufung |
| 28 | fünfter Leitungsabschnitt | 59 | zweiter Kolbenabschnitt |
| 29 | Knotenpunkt | 60 | weitere Stufung |
| 30 | erste Rückteilung | 61 | dritter Kolbenabschnitt |
| 31 | zweite Rückteilung | 62 | erster Zylinderabschnitt |
| 32 | zweiter Knotenpunkt | 63 | Anfasung |
| 33 | Blende | 64 | Schraubendruckfeder |
| 34 | sechster Leitungsabschnitt | 70 | Zylinderkörper |
| 71 | Kolben | | |
| 72 | freie Fläche | | |
| 73 | erster Kolbenabschnitt | | |
| 74 | erste Stufung | | |
| 75 | zweiter Kolbenabschnitt | | |
| 76 | dritter Kolbenabschnitt | | |
| 77 | zweite Stufung | | |
| 78 | Dichtkante | | |
| 79 | vierter Kolbenabschnitt | | |
| 80 | Vertiefung | | |
| 81 | erster Zylinderabschnitt | | |
| 82 | Stufung | | |
| 83 | zweiter Zylinderabschnitt | | |
| 84 | Anfassung | | |
| 85 | Vorsprung | | |
| 87 | Schrägfläche | | |
| 88 | Sacklochbohrung | | |
| 89 | Kugel | | |
| 90 | Schraubenfeder | | |
| 91 | Innenfläche | | |
| 92 | Kanal | | |
| 93 | erste Bohrung | | |
| 94 | zweite Bohrung | | |
| 100 | Zylinderkörper | | |
| 101 | Kolben | | |
| 102 | Innenfläche | | |
| 104 | Permanentmagnet | | |
| 105 | Werkstoffteil | | |
| 106 | Schraubenfeder | | |
| 107 | Vorsprung | | |

## Patentansprüche

1. Fluidische Vorrichtung zur Betätigung des beweglichen Kontaktstückes (16) eines Hochspannungsleistungsschalters (12), mit einer Kolben-Zylinderanordnung (11) und einer Ventilanordnung, die eine Hauptsteuerventilanordnung umfasst, die zwei 2/2-Wegeventile (26, 26a, 39) umfasst, die von einer Vorsteuerventilanordnung (22, 35) ansteuerbar sind und einen Weg für das unter Hochdruck stehende Fluid dem Raum (17) oberhalb des Kolbens (14) zusteuert und diesen Raum mit einem Niederdrucktank (37) zur Entlastung des Raumes (17) oberhalb des Kolbens (14) verbindet, wobei der Hauptsteuerventilanordnung (26, 26a; 39) zwei die Vorsteuerventilanordnung bildende 2/2-Wegeventile (22, 35) zugeordnet sind, dergestalt, dass die 2/2-Wegeventile an die Hauptsteuerventilanordnung (26, 26a; 39) entweder einen Steuerdruck, der sich auf Hochdruck befindet, oder einen Steuerdruck, der sich auf Niederdruck befindet, zusteuern oder liefern und dass zur Zuführung des unter Hochdruck stehenden Fluids in den Raum (17) oberhalb des Kolbens (14) das erste Vorsteuerventil (22) dem unter Hochdruck befindlichen Fluid den Weg zur Hauptsteuerfläche ($F_1/26$) des ersten Hauptsteuerventils (26, 26a) freigibt, so dass dieses das auf Hochdruck befindliche Fluid dem Raum (17) oberhalb des Kolbens (14) zusteuert, wobei das zweite Vorsteuerventil (35) geschlossen ist, und dass zum Entlasten des Raumes (17) oberhalb des Kolbens (14) das zweite Vorsteuerventil (35) den Weg von der Hauptsteuerfläche ($F_1/39$) des zweiten Hauptsteuerventils (39) zum Niederdrucktank (37) und damit das zweite Hauptsteuerventil (39) den Weg vom dem Raum (17) oberhalb des Kolbens (14) zum Niederdrucktank (37) freigibt, **dadurch gekennzeichnet dass** zwischen den Hauptsteuerflächen ($F_1/26$; $F_1/39$) der Hauptsteuerventile (26, 26a; 39) und dem Raum (17) oberhalb des Kolbens (14) der Kolben-Zylinderanordnung (11) eine Blende (33) mit geringem Querschnitt vorgesehen ist.

2.  Fluidische Vorrichtung nach Anspruch 1, **dadurch gekennzeichnet, dass** der Kolben (73, 101) des als bistabiles Ventil ausgebildeten ersten Hauptsteuerventils (26, 26a) in seinen Endstellungen festgehalten ist.

3.  Fluidische Vorrichtung nach Anspruch 2, **dadurch gekennzeichnet, dass** der Kolben (73) mittels einer federnden Kugelverrastung (86, 87; 89, 90) mechanisch festgehalten ist.

4.  Fluidische Vorrichtung nach Anspruch 3, **dadurch gekennzeichnet, dass** der Kolben (101) mechanisch-magnetisch in seinen Endstellungen festgehalten ist.

5.  Fluidische Vorrichtung nach Anspruch 4, **dadurch gekennzeichnet, dass** sich der Kolben (101) in einem Zylinder (100) bewegt, wobei an einem Ende des Zylinders (100) ein Permanentmagnet (104) und zwischen diesem Ende und dem Kolben (101) eine Feder (106) vorgesehen sind und dass die auf den Kolben wirkende Kraft ($F_{gesamt}$) einen Nulldurchgang aufweist.

**Claims**

1.  Fluidic device for actuating the movable contact piece (16) of a high-voltage circuit breaker (12), with a piston/cylinder arrangement (11) and a valve arrangement which comprises a main control valve arrangement which comprises two 2/2-way valves (26, 26a, 39) which are activatable by a pilot control valve arrangement (22, 35) and opens a way for the fluid which is under high pressure to the space (17) above the piston (14) and connects this space to a low-pressure tank (37) for relieving the space (17) above the piston (14), wherein the main control valve arrangement (26, 26a; 39) is assigned two 2/2-way valves (22, 35) forming the pilot control valve arrangement, in such a way that the 2/2-way valves feed or deliver to the main control valve arrangement (26, 26a; 39) either a control pressure which is at high pressure or a control pressure which is at low pressure, and in that, to supply the fluid which is under high pressure into the space (17) above the piston (14), the first pilot control valve (22) opens the way for the fluid which is under high pressure to the main control face ($F_1/26$) of the first main control valve (26, 26a), so that the latter feeds the fluid which is at high pressure to the space (17) above the piston (14), the second pilot control valve (35) being closed, and in that, to relieve the space (17) above the piston (14), the second pilot control valve (35) opens the way from the main control face ($F_1/39$) of the second main control valve (39) to the low-pressure tank (37) and consequently the second main control valve (39) opens the way from the space (17) above the piston (14) to the low-pressure tank (37), **characterized in that** an orifice plate (33) having a small cross section is provided between the main control faces ($F_1/26$; $F_1/39$) of the main control valves (26, 26a; 39) and the space (17) above the piston (14) of the piston/cylinder arrangement (11).

2.  Fluidic device according to Claim 1, **characterized in that** the piston (73, 101) of the first main control valve (26, 26a), designed as a bistable valve, is retained in its end positions.

3.  Fluidic device according to Claim 2, **characterized in that** the piston (73) is retained mechanically by means of a spring-assisted ball latching (86, 87; 89, 90).

4.  Fluidic device according to Claim 3, **characterized in that** the piston (101) is retained in its end positions mechanically and magnetically.

5.  Fluidic device according to Claim 4, **characterized in that** the piston (101) moves in a cylinder (100), a permanent magnet (104) being provided at one end of the cylinder (100) and a spring (106) being provided between this end and the piston (101), and **in that** the force (F$_{gesamt}$) acting upon the piston has a zero crossing.

**Revendications**

1. Dispositif fluidique pour l'actionnement de la pièce de contact mobile (16) d'un disjoncteur de puissance haute tension (12), comprenant un agencement cylindre-piston (11) et un agencement de soupapes, qui comprend un agencement de soupapes de commande principales qui comprend deux soupapes à 2/2 voies (26, 26a, 39), qui peuvent être commandées par un agencement de soupapes pilotes (22, 35) et qui dirige une voie pour le fluide à haute pression vers l'espace (17) au-dessus du piston (14) et relie cet espace à un réservoir basse pression (37) pour la détente de l'espace (17) au-dessus du piston (14), deux soupapes à 2/2 voies (22, 35), formant l'agencement de soupapes pilotes, étant associées à l'agencement de soupapes de commande principales (26, 26a ; 39) de telle sorte que les soupapes à 2/2 voies dirigent, ou fournissent, à l'agencement de soupapes de commande principales (26, 26a ; 39), soit une pression de commande qui se trouve à une haute pression, soit une pression de commande qui se trouve à une basse pression, et que pour l'alimentation en fluide à haute pression de l'espace (17) au-dessus du piston (14), la première soupape pilote (22) ouvre au fluide se trouvant à haute pression la voie vers la surface de commande principale (F$_1$/26) de la première soupape de commande principale (26, 26a), de sorte que celle-ci dirige le fluide se trouvant à haute pression vers l'espace (17) au-dessus du piston (14), la deuxième soupape pilote (35) étant fermée, et en ce que pour détendre l'espace (17) au-dessus du piston (14), la deuxième soupape pilote (35) libère la voie de la surface de commande principale (F$_1$/39) de la deuxième soupape de commande principale (39) au réservoir basse pression (37) et donc la deuxième soupape de commande principale (39) libère la voie allant de l'espace (17) au-dessus du piston (14) au réservoir basse pression (37), **caractérisé en ce qu'**un obturateur (33) de faible section transversale est prévu entre les surfaces de commande principales (F$_1$/26 ; F$_1$/39) des soupapes de commande principales (26, 26a ; 39) et l'espace (17) au-dessus du piston (14) de l'agencement cylindre-piston (11).

2. Dispositif fluidique selon la revendication 1, **caractérisé en ce que** le piston (73, 101) de la première soupape de commande principale (26, 26a) réalisée sous forme de soupape bistable est fixé dans ses positions d'extrémité.

3. Dispositif fluidique selon la revendication 2, **caractérisé en ce que** le piston (73) est fixé mécaniquement au moyen d'un encliquetage à rotule à ressort (86, 87 ; 89, 90).

4. Dispositif fluidique selon la revendication 3, **caractérisé en ce que** le piston (101) est fixé de manière mécanique-magnétique dans ses positions d'extrémité.

5. Dispositif fluidique selon la revendication 4, **caractérisé en ce que** le piston (101) se déplace dans un cylindre (100), un aimant permanent (104) étant prévu à une extrémité du cylindre (100) et entre cette extrémité et le piston (101) étant prévu un ressort (106), et **en ce que** la force agissant sur le piston (F$_{gesamt}$) présente un passage à zéro.

$P_1$

13 14 11 18 15 12

17 16

41 23 29 26 27

43 39 28 31

40 64 33 $F_3/26$

$F_2/26$

$F_3/39$ 38 32 $F_1/26$ 25 30 20

$F_2/39$ 42 $F_1/39$ 23 24

45 44 20a

35 21 10

34 47 46

36

34

37 19

42

Fig. 1

EP 2 513 937 B1

Fig. 2

EP 2 513 937 B1

Fig. 3

Fig. 4

Fig. 5

**EP 2 513 937 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2047847 A1

- DE 20116920 U1